(19)

Europäisches
Patentamt
European
Patent Office
Office européen
des brevets

(11) **EP 3 376 452 A1**

(12) **EUROPEAN PATENT APPLICATION**

(43) Date of publication:
**19.09.2018 Bulletin 2018/38**

(51) Int Cl.:
**G06Q 20/02** *(2012.01)*  **G06Q 20/06** *(2012.01)*

(21) Application number: **17305277.0**

(22) Date of filing: **15.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Technologies Oy
02610 Espoo (FI)**

(72) Inventors:
• **PIANESE, Fabio
91620 NOZAY (FR)**
• **SIGNORINI, Mattéo
91620 NOZAY (FR)**

(74) Representative: **Loyer & Abello
9, rue Anatole de la Forge
75017 Paris (FR)**

(54) **BLOCKCHAIN-BASED ELECTRONIC TRANSFER METHOD AND NETWORK**

(57)   A method of maintaining a transaction database in an electronic transfer network, the method improving privacy of the network by making it possible to discard older transactions by enforcing demurrage, the method comprising: verifying, the value of an input $N(t_g)$ of a new transaction is equal to the value of the output $M(t_a)$ it references, multiplied once by a demurrage rate r for every block between the past block $B_x$ storing the past transaction $(t_a)$ whose output $M(t_a)$ is referenced and the new block $(B_z)$:

$$N(t_g) = M(t_a)r^{z-x}, \qquad z > x, \qquad 0 > r > 1$$

Verifying that the total value of the new transaction's outputs $M(t_g)$ is equal or inferior to the total value of the new transaction's inputs $N(t_g)$,
if the condition is verified, validating the new block $(B_z)$.

FIG.1

EP 3 376 452 A1

## Description

### Field of the invention

The invention relates to the technical field of security and privacy within an electronic transfer network implementing the blockchain technology.

### Background

Bitcoin and other proof-of-work cryptocurrencies are based on a ledger that records transactions, and on an incentive mechanism by which value is created in the system that becomes available for performing transactions.

The ledger records the entire history of transactions, organized as a chain of subsequent blocks (blockchain). The immutability of the ledger content is its fundamental property that guarantees the trustworthiness of the system, preventing 'double spending' attacks that would make accounting unreliable. The incentive issues currency units in exchange for participation in the running of the distributed system. In Bitcoin, the nodes that perform validation use a proof-of-work (PoW) challenge where a secure hash function H is computed on a block of pending valid transactions T, combined with a randomly-chosen string (also known as nonce). The solution of a PoW is a nonce that, when combined with a block containing T transactions, yields a value of H(nonce, T) that satisfies a property, such as the numerical value of H being smaller than a set threshold. This threshold, corresponding to a variable difficulty parameter, is used to tune the average expected time necessary to find a solution for the next block and renders the Bitcoin network stable against fluctuations of available computing capacity.

A drawback of the blockchain used as a complete transaction ledger, as is the case in Bitcoin, is that its size is monotonically growing: the current growth rate, based on the maximum size of blocks presently capped at 1Mb per block, is in the worst case 6Mb/hour, or a little more than 52 Gb per year. After six years of operation, the blockchain is today about 72 Gb of size, having increased its growth rate rapidly to 32 Gb during the last twelve months.

Two orders of drawbacks exist:

1) For verification of blocks to be possible, it is necessary to fetch an increasingly unwieldy local copy of the past system history.

2) To prevent double spend, the system will never forget about any transaction, which means that privacy of future transactions (at any later moment in time) could be compromised by an attacker with enough means and motivation.

Solutions in the prior art aim to solve this problem by reducing the transaction load that needs to be written to the blockchain. For instance, the "Lightning" Bitcoin extension works by establishing pairwise channels of 'open' transactions that can be incrementally updated by local agreement of the two involved parties and have conditional 'foul play' clauses that punish misbehavior of either user. Besides opening a new attack surface on the payment system (e.g., by tricking the other party and making them misbehave by manipulating the state they have access to, which is no longer validated and protected by the secure blockchain process), it moves the storage issue from the blockchain to the local working memory of verifiers, and requires an initial set-up phase between two users that agree on the maximum outstanding balance they want to associate to their pairwise channel (which then becomes unavailable for regular transactions). The scheme does not seem to improve the privacy on the transactions, for the mere existence of a channel betrays its endpoints. Furthermore, the multi-hop payment scheme based on the routing of transactions over contiguous channels requires a critical mass of Lightning adopters and might be over-simplistic and again prone to exploitation.

### Summary

The design of a distributed transfer system for enabling payments and micro-transactions among connected devices has long been a major challenge in applied computer science systems. The current technical solutions (e.g. Bitcoin) that reached widespread adoption suffer from problems. A major issue with the data structure that collects the entire body of transactions, the so-called Blockchain, is that its growth is unbounded and roughly linear with time and transaction rate. Such drawback is structural to a distributed system made to keep balances and prevent against double spend: the entire history of the system needs to be available for verification.

The invention provides a modification of the blockchain data structure that still prevents double spending but eliminates the need for storing the entire history of transactions.

The basic idea of the invention consists in enforcing, through technical means, nominal devaluation (also known as demurrage) on the outstanding balances in the system.

The invention provides for a method of maintaining a transaction database in the form of a blockchain, in an electronic transfer network, the blockchain comprising blocks $B_0,... B_z$, each block $B_0,... B_z$ containing a timestamp and a link to a past block $B_0,... B_z$, each block storing transactions $t_a, t_b, t_c,...t_x$, the method being performed at a node of the network, the node storing a copy of the blockchain, the method comprising:

receiving a block $B_z$ to be validated including at least a hash of a previous block $B_{z-1}$ and a new transaction $t_g$, the new transaction $t_g$ comprising at least one output $M(t_g)$, and at least one input $N(t_g)$, each input $N(t_g)$ of the new transaction $t_g$ referencing an output $M(t_a)$ of a past transaction $t_a$, said past transaction $t_a$ being stored in a past block $B_x$,

calculating, the value of every input $N(t_g)$ of every new transaction $t_g$ of the block $(B_z)$ to be validated, the value of an input $N(t_g)$ being equal or inferior to the value of the output $M(t_a)$ it references, multiplied once by a demurrage rate $r$ for every block between the past block $B_x$ storing the past transaction $t_a$ whose output $M(t_a)$ is referenced and the new block $B_z$:

$$N(t_g) = M(t_a)r^{z-x}, \qquad z > x, \qquad 0 > r > 1$$

verifying, for every new transaction $t_g$ of the block $B_z$ to be validated, that the total value of the new transaction's outputs $M(t_g)$ is equal or inferior to the total value of the new transaction's inputs $N(t_g)$,

if the condition is verified, validating the block $B_z$ to be validated and considering its contents a trusted segment of the blockchain.

In embodiments, the method further comprises verifying that none of the inputs $N(t_g)$ of a new transaction references an output $M(t_a)$ of a past transaction $t_a$ stored in a past block $B_x$ whose distance to the block $B_z$ to be validated is more than $\Delta T_{max} = \log_r \frac{1-r}{q*10^k}$ , $k$ being the decimal digits of an accounting *unit*, $q$ being a reward received by a node upon creating a new block $B_z$.

In embodiments, the method further comprises verifying that the block $B_z$ to be validated belongs to a longest continuous blockchain block sequence being maintained.

In embodiments, the method further comprises

receiving a message including a new transaction $t_g$, the new transaction $t_g$ comprising at least one output $M(t_g)$, and at least one input $N(t_g)$, each input $N(t_g)$ of the new transaction $t_g$ referencing an output $M(t_a)$ of a past transaction $t_a$, said past transaction $t_a$ being stored in a past block $B_x$,

calculating, the value of every input $N(t_g)$ of the new transaction $t_g$, the value of an input $N(t_g)$ being equal or inferior to the value of the output $M(t_a)$ it references, multiplied once by a demurrage rate $r$ for every block between the past block $(B_x)$ storing the past transaction $t_a$ whose output $M(t_a)$ is referenced and a new block $B_z$ to be created:

$$N(t_g) = M(t_a)r^{z-x}, \qquad z > x, \qquad 0 > r > 1$$

verifying that the total value of the new transaction's outputs $M(t_g)$ is equal or inferior to the total value of the new transaction's inputs $N(t_g)$,

if the condition is verified, computing a proof of work, creating a new block $B_z$ storing the new transaction $t_g$ and the proof of work, updating the blockchain with the new block $B_z$, and broadcasting the new block $B_z$ to the network.

In embodiments, the method further comprises creating a special reward transaction of $q$ accounting units upon creating a new block $B_z$.

In embodiments, the method further comprises discarding blocks whose distance to the new block $B_z$ is more than $\Delta T_{max} = \log_r \frac{1-r}{q*10^k}$ , $k$ being the decimal digits of the accounting unit, $q$ being a reward expressed in accounting units received by a node upon creating a new block $(B_z)$.

The invention also provides a node of a blockchain based electronic transfer network, the node including an electronic data storage, a transceiver, and a processing system coupled to the electronic data storage and the transceiver, the electronic data storage storing a transaction database in the form of a blockchain, the blockchain comprising blocks $B_0,... B_z$, each block $B_1,... B_z$ containing a timestamp and a link to a past block $B_0,... B_{z-1,}$ the processing system being configured for:

receiving a block $B_z$ to be validated including at least a hash of a previous block $B_{z-1}$ and a new transaction $t_g$, the new transaction $t_g$ comprising at least one output $M(t_g)$, and at least one input $N(t_g)$, each input $N(t_g)$ of the new transaction $(t_g)$ referencing an output $M(t_a)$ of a past transaction $t_a$, said past transaction $t_a$ being stored in a past block $B_x$,

calculating, the value of every input $N(t_g)$ of every new transaction $t_g$ of the block $B_z$ to be validated, the value of an input $N(t_g)$ being equal or inferior to the value of the output $M(t_a)$ it references, multiplied once by a demurrage rate r for every block between the past block $B_x$ storing the past transaction $t_a$ whose output $M(t_a)$ is referenced and the new block $B_z$:

$$N(t_g) = M(t_a)r^{z-x}, \qquad z > x, \qquad 0 > r > 1$$

verifying, for every new transaction $t_g$ of the block $B_z$ to be validated, that the total value of the new transaction's outputs $M(t_g)$ is equal or inferior to the total value of the new transaction's inputs $N(t_g)$,

if the condition is verified, validating the block $B_z$ to be validated and considering its contents a trusted segment of the blockchain.

In embodiments, the node is further configured for

receiving a message including a new transaction $t_g$, the new transaction $t_g$ comprising at least one output $M(t_g)$, and at least one input $N(t_g)$, each input $N(t_g)$ of the new transaction $t_g$ referencing an output $M(t_a)$ of a past transaction $t_a$, said past transaction $t_a$ being stored in a past block $B_x$,

calculating, the value of every input $N(t_g)$ of the new transaction $t_g$, that the value of an input $N(tg)$ being equal or inferior to the value of the output $M(t_a)$ it references, multiplied once by a demurrage rate r for every block between the past block $B_x$ storing the past transaction $t_a$ whose output $M(t_a)$ is referenced and a new block $B_z$ to be created:

$$N(t_g) = M(t_a)r^{z-x}, \qquad z > x, \qquad 0 > r > 1$$

verifying that the total value of the new transaction's outputs $M(t_g)$ is equal or inferior to the total value of the new transaction's inputs $N(t_g)$,

if the condition is verified, computing a proof of work, creating a new block $B_z$ storing the new transaction $t_g$ and the proof of work, updating the blockchain with the new block $B_z$, and broadcasting the new block $B_z$ to the network.

In embodiments, the node is further configured for verifying that none of the inputs $N(t_g)$ of a new transaction references an output $M(t_a)$ of a past transaction $t_a$ stored in a past block $B_x$ whose distance to the block $B_z$ to be validated

is more than $\Delta T_{max} = \log_r \dfrac{1-r}{q*10^k}$ , $k$ being the decimal digits of an accounting unit, $q$ being a reward received by a node upon creating a new block $B_z$.

In embodiments, the node is further configured for verifying that the block $B_z$ to be validated belongs to a longest continuous blockchain block sequence being maintained.

The invention also provides a blockchain based electronic transfer network including multiple nodes as described above.

In embodiments, each time a new block $B_z$ is created a reward of $q$ accounting unit is attributed to the node that created the new block.

In embodiments, the blockchain only contains blocks whose distance to the last block $B_z$ is less than

$\Delta T_{max} = \log_r \dfrac{1-r}{q*10^k}$ , $k$ being the decimal digits of the accounting unit, $q$ being the reward received by a node upon creating a new block $B_z$.

The invention also provides a computer program comprising executable code that causes a computer to perform all the steps of a method as described above.

The technical effect of these features is that the blockchain will not need to be kept indefinitely but can be trimmed whenever the transactions contained in its oldest blocks would become entirely devaluated. As long as the integrity of the blockchain has been verified over the remaining window of blocks, all outstanding balances available for new transactions are fully preserved for (by the devaluation argument above) any past transaction is irrelevant to the correctness of the system's operation. This relation greatly limits the size of the blockchain that needs to be stored and looked up for validation purposes, sidestepping the need for consistency to be ensured from the very beginning of the blockchain. Meanwhile, the uniqueness of the blockchain (i.e., avoiding divergence in transaction records) is practically guaranteed by the continuous system operation and the length of the non-devaluated blockchain window. A second technical effect of these features is limiting the memory of the blockchain data structure to a bounded horizon, ensuring that no inadvertent reuse of older unspent transaction inputs can be linked with future transactions. This feature increases the privacy of the resulting payment system.

**Brief description of the drawings**

These and other aspects of the invention will be apparent from and elucidated with reference to the embodiments described hereinafter, by way of example, with reference to the drawings.

Figure 1 is a functional representation of a blockchain according to the invention.
Figure 2 illustrates a window outside which outstanding UTXOs are no longer spendable.
Figure 3 illustrates a rolling blockchain window of fixed maximum size in which spendable UTXO can be found.
Figure 4 is a functional representation of an electronic transfer network according to the invention, highlighting aspects concerning the incentive mechanism and the flow of transactions in the network.

**Detailed description of the embodiments**

Bitcoin is a decentralized electronic currency system using peer-to-peer networking, digital signatures and cryptographic proof-of-work to enable irreversible transfers (payments) between parties without relying on trust. Payments are made in bitcoins, a digital currency issued and transferred by the Bitcoin network. Nodes broadcast transactions to the network, which records them in a public history after validating them through a consensus-based proof-of-work system. The present invention is not limited to Bitcoin, and is applicable in other decentralized electronic systems where transfers are made.

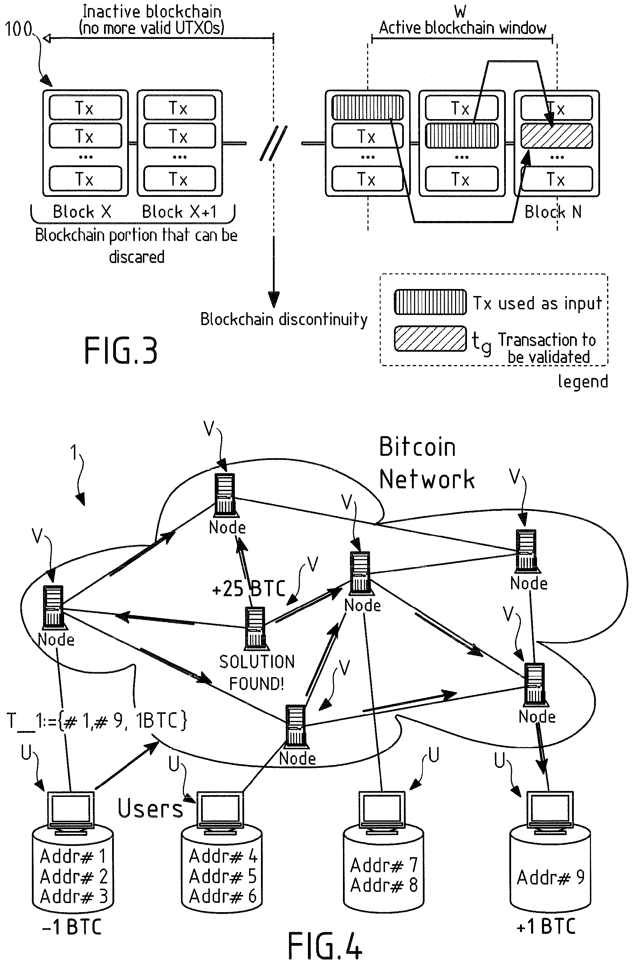

In reference to figure 4, an electronic transfer network 1 includes a plurality of connected nodes U, V.

Some nodes are users U that hold a repository and take part in transactions as senders and receivers. All other nodes are validators V that verify the validity of a new block. Some validators are also miners that attempt to create new blocks in exchange for a reward.

The electronic transfer network 1 is a broadcast network that propagates transactions and blocks.

Users U of decentralized electronic systems each have repositories. In a repository, the user can store a budget, preferably in a digital currency. This budget contains funds having a value. The repository functions as a digital wallet.

Funds are unspent transaction outputs (UTXO) that can be further spent. Keys to be used for unlocking UTXOs are held by users in repositories (called "wallets"). A UTXO requires a private cryptographic key and at least one public cryptographic key (or address) that has been generated based on the at least one private cryptographic key.

A digital repository can be stored in a memory. Multiple repositories can be stored in one memory of an electronic device.

A transaction is created when a node U prepares and broadcasts a new message to the rest of the network 1 instructing them to operate on the global state of the electronic transfer message.

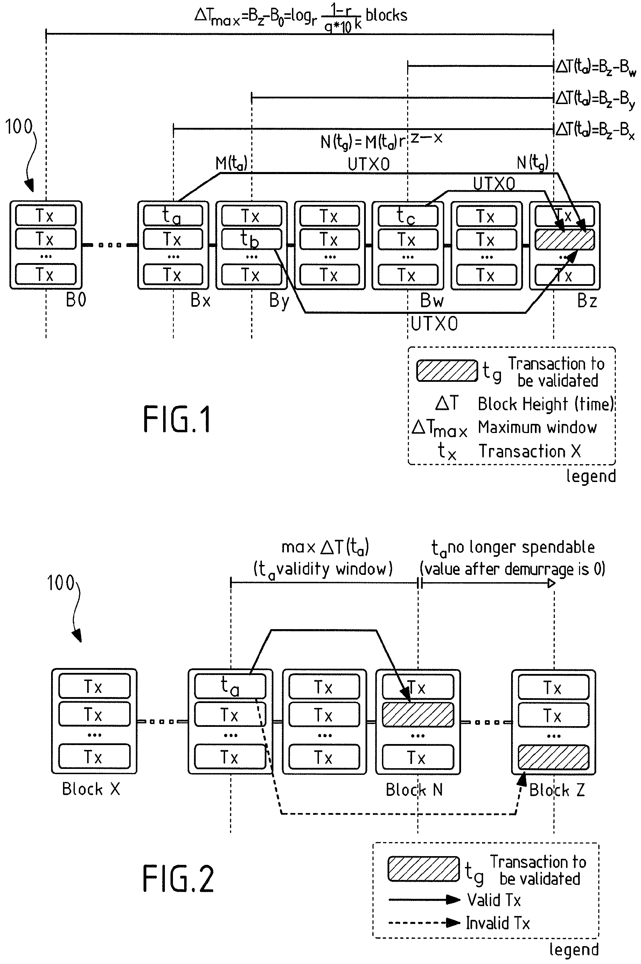

In reference to figure 1, a transaction $t_a$, $t_b$, $t_c$,... $t_g$ enacts a transfer of value from a set of addresses controlled by an end-user to another set of addresses controlled by another end-user.

A transaction is a digital code based on one or more addresses containing unspent outputs from earlier transactions, one or more addresses derived from the public key whose private key the receiver controls, and the amount to be transferred. The digital code is furthermore signed using a private encryption key related to the sender addresses. The signature can be verified by anyone by way of the sender's public keys. The digital code makes clear what (amount) is to be transferred from who (sender) to whom (receiver).

A transaction is published to the network by the sender. Peers broadcast the transactions they receive to their neighbors. All validator peers trying to solve blocks collect the transaction records and add them to the block $B_z$ they are working to solve.

The transfer of value in such a decentralized electronic system only takes effect after publication of the transaction. In fact the transfer becomes effective after validation by the network, meaning that after publication the public has the power to invalidate a published transfer if it considers the transfer not valid (for example because the fund associated with the input address are insufficient or because the sender's signature is erroneous). The decentralized electronic system has validation mechanisms by which the public can accept or reject published transfers.

Validators and miners calculate whether digital codes newly published digital codes representing new transactions $t_g$ are coherent with the existing chain.

If the digital code is coherent with the existing chain, miners include the new *transactions* $t_g$ into a new block $B_z$ which is added to the end of the chain and can never be changed or removed once accepted by the network

If the digital code is in incoherence with the existing chain, the digital code is rejected thereby invalidating the transaction represented by the digital code.

Each block contains, among other things, a record of recent transactions and a reference to the block that came immediately before it.

The blockchain 100 is shared by all nodes of the network. With this information, one can find out how much value belonged to each address at any point in history.

Each transaction $t_g$ has at least one input $N(t_g)$ and at least one output $M(t_g)$.

Each input $N(t_g)$ references at least one output $M(t_a)$ from a past transaction $t_a$ stored in a past block $B_x$.

A transaction contains instructions for sending bitcoins. Its output indicates the address and the value that the owner of the address shall be entitled to spend when claiming it.

Each transaction further contains the public key of the sender and a signature based on the private key of the sender. To reference an UTXO, a new transaction's input must provide a signature made with a private key matching the public key associated with the address stored in the UTXO. The public key of the sender is used to verify the signature provided in the input. The valid signature of the transaction input together with the public key of the address referenced by the input proves that the user claiming the UTXO is authorized to spend the balance, for a user must know the relative private key to generate a valid signature.

Transactions imply that one or more inputs withdraw the coins that were previously deposited in one or more outputs. The difference between the outputs and inputs of a transaction is called an implicit transaction output and is kept by the validator as transaction fees. Values $M(t_a)$ associated with explicit outputs are recorded as Unspent Transaction Outputs (UTXOs) until a later transaction spends them.

When a transaction is published in the network, the validator first verifies, at a transaction validation step, that inputs are authorized to collect the values of referenced outputs. To that end, the validator verifies that the input's signature matches the referenced output's public key. The validator then verifies that the address from which the funds are drawn contains enough funds.

A nominal devaluation mechanism (also known as demurrage) based on the steady growth of the blockchain is implemented. The nominal devaluation mechanism is a statistically regular process and can therefore limit in a very predictable way the time horizon for which the observable effects of each transaction should last. Nominal devaluation is deterministic. Block generation is statistically regular and its average rate can be adapted to changes of deployed hashing power over several days.

As depicted in Figure 1, UTXO values are implicitly trimmed over time based on the demurrage rate and the block height of each UTXO t_i, which we note as ΔT(t_i). The block height of a UTXO is the number of blocks in the chain between the block storing the UTXO and the last block of the chain at the time of observation.

To that end, the transaction validation step takes into account the block height, that is the age in blocks of all of its transaction output. The transaction validation step includes verifying at the time a transaction takes place whether the sum of transaction outputs after devaluation is equal or larger than the sum of the new transaction's inputs.

For every block solved between the current block and the block including the output being referenced, the available funds of an UTXO are multiplied by a factor 0<r<1, where r=1-d and d>0 is the demurrage rate. In the simplest case of a new transaction N, validated at current block $B_z$, referencing an unspent output $t_a$ of transaction M stored in block $B_x$ (with no other prior use of the address $a$), the maximum valid value of transaction $N(t_g)$ will be "aged" by the block height $z-x$:

$$N(t_g) = M(t_a)r^{z-x}, \qquad z > x, \qquad 0 > r > 1$$

If several transactions exist that credit the same address $a$ in past blocks, the valid amounts associated with each of them at block $B_z$ are individually processed by tracking the number of blocks elapsed since each transaction in which the address was credited.

It follows that the value of each input $N(t_g)$ of a given new transaction $t_g$ with multiple input addresses cannot be larger than the sum value of the individual outputs $M(t_a)$ it references after the loss by demurrage rate r has been accounted for as explained above.

Due to the enforced demurrage, every sum users hold in association to the addresses they control has its value decaying geometrically over time. The stored value will halve every $log_r(1/2)$ blocks and eventually reach zero when the decimal precision of the accounting unit (in Bitcoin's case it's $10^{-8}$) cannot represent its value any longer. By consequence, without any further measures being taken, the entire monetary mass in existence would be decreasing over time.

To achieve a steady state in the supply of currency, new units need to be introduced into the system with every block to compensate for the demurrage loss. Therefore, at every new block creation, a fixed reward of q is attributed to the miner that solves the PoW challenge. It so follows that the total amount of currency in existence at any given moment (after steady state is reached) is necessarily determined by *q and r* as

$$C = \sum_i^\infty q_i = q + qr + qr^2 + \ldots = \frac{q}{1-r}.$$

The content of the ledger will not need to be kept indefinitely but can be trimmed. As long as the integrity of the blockchain has been verified over a sufficiently long window of $\Delta T_{max}$ blocks, all outstanding balances are fully described and any past transaction is irrelevant to the correctness of the system's operation. Assuming that the accounting unit is represented with a precision of k decimal digits, the number of past blocks that contain non-zero balances is

$$\Delta T_{max} = \log_r \frac{1-r}{q*10^k}.$$ , A number of blocks not larger than $\Delta T_{max}$ need to be stored in the blockchain 100 to be able to validate new transactions. The older blocks can thus be suppressed. This property greatly limits the size of the blockchain that needs to be stored and looked up for validation purposes, speeding up the work of validator nodes. It also sidesteps the need for consistency to be ensured from the beginning of the blockchain: the distant past can be forgotten. Meanwhile, the uniqueness of the blockchain (i.e., avoiding divergence in transaction records) is practically guaranteed by the continuous chain of consensus over the last $\Delta T_{max}$ blocks.

Hence, as shown in Figure 2, the system defines for every transaction $t_a$ a window max$\Delta T(t_a)$ outside which an outstanding UTXO of the transaction $t_a$ is no longer spendable. The window $\Delta T(t_a)$ includes the blocks subsequent to the block storing the transaction $t_a$ whose distance to the block storing the transaction $t_a$ is less than $\Delta T_{max}$ blocks and in which $t_a$ has non-zero value.

The resulting behavior is shown in Figure 3. Demurrage creates a constant attrition in the unspent values stored in the blockchain, thus determining a rolling blockchain window W of fixed maximum size $\Delta T_{max}$ in which spendable UTXO can be found. Stored transactions that lie outside this window W can be discarded, as they are effectively meaningless for the purpose of creating new transactions.

Any transaction referencing addresses associated with expired transaction outputs should be considered invalid. This hinders persisting used addresses beyond $\Delta T_{max}$ by decoupling subsequent block windows W. However, as we suppose that all the expired transaction will not be kept, we cannot enforce the invalidation of previously-used addresses.

The method by which validators retrieve information to validate new transactions $t_g$ while applying demurrage can be implemented as an extension to the standard Bitcoin protocol. In order to check for double spending attacks, the blockchain is traversed starting from the most recent block until all referenced UTXO are resolved or the beginning of the window (the oldest block liable to contain valid UTXOs) is reached. Only the last $\Delta T_{max}$ blocks are traversed during validation (in the worst case - the actual average balance lifetime will be much shorter for it depends on the largest UTXO values having been transacted). The double spending check done on each UTXO t_i will account for demurrage by multiplying the UTXO value by the term r^$\Delta T(t\_i)$.

Upon receiving a new block $B_z$ including a new transaction $t_g$, a validator V makes sure that the address from which the funds are drawn M($t_a$) contains enough funds at the current block $B_z$ by appropriately factoring in the depreciation of the amount M($t_a$) originally stored in the blockchain at block $B_x$.

To that end the validator V verifies, for every new transaction $t_g$ of the new block $B_z$, that the value of every input $N(t_g)$ of the new transaction $t_g$ is equal to the value of the output M($t_a$) it references, multiplied once by a demurrage rate r for every block between the past block $B_x$ storing the past transaction ($t_a$) whose output M($t_a$) is referenced and the new block ($B_z$):

$$N\left(t_g\right) = M(t_a)r^{z-x}, \qquad z > x, \qquad 0 > r > 1$$

The validator V also verifies that, for every new transaction ($t_g$) of the new block ($B_z$), the total value of the new transaction's outputs $M(t_g)$ is equal or inferior to the total value of the new transaction's inputs $N(t_g)$.

If the two conditions are verified, the validator V validates the received new block $B_z$ and updates its copy of the blockchain 100 by adding the new block $B_z$ to the blockchain 100.

If one of the two conditions is not verified, there is insufficient available balance, and the transaction $t_g$ is disregarded.

In order to add a new transaction $t_g$ into a new block to be created, a miner verifies, for every input $N(t_g)$ of the new transaction $t_g$, that the value of the input $N(t_g)$ is equal to the value of the output M($t_a$) it references, multiplied once by a demurrage rate r for every block between the past block $B_x$ storing the past transaction ($t_a$) whose output $M(t_a)$ is referenced and the new block ($B_z$):

$$N\left(t_g\right) = M(t_a)r^{z-x}, \qquad z > x, \qquad 0 > r > 1$$

The miner also verifies that the total value of the new transaction's outputs $M(t_g)$ is equal or inferior to the total value of the new transaction's inputs $N(t_g)$.

If both conditions are verified the miner includes the new transaction $t_g$ into the new block it is creating.

To that end, the miner computes a proof of work (PoW). As soon as the PoW for the block is completed, the miner creates a new block $B_z$ storing the recent transactions $t_g$ not yet included in a block and including the proof of work, updates its copy of the blockchain 100 with the new block $B_z$, and broadcasts the new block $B_z$ to the network 1. The new block is verified by validators V as explained above until consensus is reached and work begins on a new transaction block.

The way in which the value lost to demurrage is reintroduced to the system is entirely compliant with the standard Bitcoin protocol. A "coinbase" transaction worth q (i.e., the $r^{th}$ fraction of the total monetary mass C) is collected together with the transaction fees by the miner that first solves the proof of work challenge for the current block.

Elements such as a node of the network could each be or include e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modifications and alternative constructions that may occur to one skilled in the art, and which fairly fall within the basic teaching as set forth herein.

The use of the verb "to comprise", "to include" or "to contain" and their conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. Method of maintaining a transaction database in the form of a blockchain (100), in an electronic transfer network (1), the blockchain (100) comprising blocks $B_0,... B_z$, each block $B_0,... B_z$ containing a timestamp and a link to a past block $B_0,... B_z$, each block storing transactions $t_a, t_b, t_c,... t_x$, the method being performed at a node (V) of the network, the node (V) storing a copy of the blockchain (100), the method comprising:

   receiving a block $B_z$ to be validated including at least a hash of a previous block $B_{z-1}$ and a new transaction $t_g$, the new transaction $t_g$ comprising at least one output $M(t_g)$, and at least one input $N(t_g)$, each input $N(t_g)$ of the new transaction $t_g$ referencing an output $M(t_a)$ of a past transaction $t_a$, said past transaction $t_a$ being stored in a past block $B_x$,
   calculating, the value of every input $N(t_g)$ of every new transaction $t_g$ of the block $B_z$ to be validated, the value of an input $N(t_g)$ being equal or inferior to the value of the output $M(t_a)$ it references, multiplied once by a demurrage rate r for every block between the past block $B_x$ storing the past transaction $t_a$ whose output $M(t_a)$ is referenced and the new block $B_z$:

$$N(t_g) = M(t_a)r^{z-x}, \qquad z > x, \qquad 0 > r > 1$$

   verifying, for every new transaction $(t_g)$ of the block $(B_z)$ to be validated, that the total value of the new transaction's outputs $M(t_g)$ is equal or inferior to the total value of the new transaction's inputs $N(t_g)$,
   if the condition is verified, validating the block $B_z$ to be validated and considering its contents a trusted segment of the blockchain (100).

2. The method of claim 1, further comprising verifying that none of the inputs $N(t_g)$ of a new transaction references an output $M(t_a)$ of a past transaction $t_a$ stored in a past block $B_x$ whose distance to the block $B_z$ to be validated is more than $\Delta T_{max} = \log_r \frac{1-r}{q*10^k}$, k being the decimal digits of an accounting unit, q being a reward received by a node upon creating a new block $B_z$.

3. The method of claim 1 or 2, further comprising verifying that the block $B_z$ to be validated belongs to a longest continuous blockchain (100) block sequence being maintained.

4. The method of any one of claims 1 to 3, further comprising:

receiving a message including a new transaction ($t_g$), the new transaction ($t_g$) comprising at least one output $M(t_g)$, and at least one input $N(t_g)$, each input $N(t_g)$ of the new transaction ($t_g$) referencing an output $M(t_a)$ of a past transaction ($t_a$), said past transaction $t_a$ being stored in a past block $B_x$,
calculating, the value of every input $N(t_g)$ of the new transaction $t_g$, the value of an input $N(t_g)$ being equal or inferior to the value of the output $M(t_a)$ it references, multiplied once by a demurrage rate $r$ for every block between the past block $B_x$ storing the past transaction $t_a$ whose output $M(t_a)$ is referenced and a new block $B_z$ to be created:

$$N\left(t_g\right) = M(t_a)r^{z-x}, \qquad z > x, \qquad 0 > r > 1$$

verifying that the total value of the new transaction's outputs $M(t_g)$ is equal or inferior to the total value of the new transaction's inputs $N(t_g)$,
if the condition is verified, computing a proof of work, creating a new block $B_z$ storing the new transaction $t_g$ and the proof of work, updating the blockchain (100) with the new block $B_z$, and broadcasting the new block $B_z$ to the network (1).

5. The method of claim 4, further comprising creating a special reward transaction of $q$ accounting units upon creating a new block $B_z$.

6. The method of any of claims 1 to 5, further comprising discarding blocks whose distance to the new block $B_z$ is more than $\Delta T_{max} = \log_r \frac{1-r}{q*10^k}$, $k$ being the decimal digits of the accounting unit, q being a reward expressed in accounting units received by a node upon creating a new block $B_z$.

7. Node (V) of a blockchain based electronic transfer network (1), the node (V) including an electronic data storage, a transceiver, and a processing system coupled to the electronic data storage and the transceiver,
the electronic data storage storing a transaction database in the form of a blockchain (100), the blockchain (100) comprising blocks $B_0,... B_z$, each block $B_1,... B_z$ containing a timestamp and a link to a past block $B_0,... B_{z-1}$,
the processing system being configured for:

receiving a block $B_z$ to be validated including at least a hash of a previous block $B_{z-1}$ and a new transaction $t_g$, the new transaction $t_g$ comprising at least one output $M(t_g)$, and at least one input $N(t_g)$, each input $N(t_g)$ of the new transaction ($t_g$) referencing an output $M(t_a)$ of a past transaction $t_a$, said past transaction $t_a$ being stored in a past block $B_x$,
calculating, the value of every input $N(t_g)$ of every new transaction $t_g$ of the block $B_z$ to be validated, the value of an input $N(t_g)$ being equal or inferior to the value of the output $M(t_a)$ it references, multiplied once by a demurrage rate r for every block between the past block $B_x$ storing the past transaction $t_a$ whose output $M(t_a)$ is referenced and the new block $B_z$:

$$N\left(t_g\right) = M(t_a)r^{z-x}, \qquad z > x, \qquad 0 > r > 1$$

verifying, for every new transaction $t_g$ of the block $B_z$ to be validated, that the total value of the new transaction's outputs $M(t_g)$ is equal or inferior to the total value of the new transaction's inputs $N(t_g)$,
if the condition is verified, validating the block $B_z$ to be validated and considering its contents a trusted segment of the blockchain (100).

8. Node (V) according to claim 7, further configured for:

receiving a message including a new transaction $t_g$, the new transaction $t_g$ comprising at least one output $M(t_g)$, and at least one input $N(t_g)$, each input $N(t_g)$ of the new transaction $t_g$ referencing an output $M(t_a)$ of a past

transaction ($t_a$), said past transaction $t_a$ being stored in a past block $B_x$,

calculating, the value of every input $N(t_g)$ of the new transaction $t_g$, that the value of an input $N(t_g)$ being equal or inferior to the value of the output $M(t_a)$ it references, multiplied once by a demurrage rate r for every block between the past block $B_x$ storing the past transaction $t_a$ whose output $M(t_a)$ is referenced and a new block $B_z$ to be created:

$$N(t_g) = M(t_a)r^{z-x}, \qquad z > x, \qquad 0 > r > 1$$

verifying that the total value of the new transaction's outputs $M(t_g)$ is equal or inferior to the total value of the new transaction's inputs $N(t_g)$,

if the condition is verified, computing a proof of work, creating a new block $B_z$ storing the new transaction $t_g$ and the proof of work, updating the blockchain (100) with the new block $B_z$, and broadcasting the new block $B_z$ to the network (1).

9. The node of claim 7 or 8, further configured for verifying that none of the inputs $N(t_g)$ of a new transaction references an output $M(t_a)$ of a past transaction $t_a$ stored in a past block $B_x$ whose distance to the block $B_z$ to be validated is more than $\Delta T_{max} = \log_r \frac{1-r}{q*10^k}$, $k$ being the decimal digits of an accounting unit, $q$ being a reward received by a node upon creating a new block $B_z$.

10. The node of any one of claims 7 to 9, further configured for verifying that the block $B_z$ to be validated belongs to a longest continuous blockchain (100) block sequence being maintained.

11. Blockchain based electronic transfer network (1) including multiple nodes (V) according to any one of claims 7 to 10.

12. Network according to claim 11, wherein each time a new block $B_z$ is created a reward of q accounting unit is attributed to the node (V) that created the new block.

13. Network according to claim 11 or 12, wherein the blockchain (100) only contains blocks whose distance to the last block $B_z$ is less than $\Delta T_{max} = \log_r \frac{1-r}{q*10^k}$, $k$ being the decimal digits of the accounting unit, q being the reward received by a node upon creating a new block $B_z$.

14. A computer program comprising executable code that causes a computer to perform all the steps of a method in accordance with any one of claims 1 to 6 when executed.

FIG.1

FIG.2

Inactive blockchain
(no more valid UTXOs)

100

W
Active blockchain window

Tx
Tx
...
Tx

Tx
Tx
...
Tx

Block X    Block X+1

Blockchain portion that can be discared

Tx
...
Tx

Tx
...
Tx

Tx
...
Tx

Block N

Blockchain discontinuity

**FIG.3**

legend

| | |
|---|---|
| Tx used as input | |
| $t_g$ Transaction to be validated | |

V

1

V

Bitcoin
Network

V

Node

V

V

Node

+25 BTC

V

Node

Node

V

SOLUTION
FOUND!

V

Node

Node

T_1:={# 1,# 9, 1BTC}

U

Users

U

U

U

Addr# 1
Addr# 2
Addr# 3

Addr# 4
Addr# 5
Addr# 6

Addr# 7
Addr# 8

Addr# 9

−1 BTC

+1 BTC

**FIG.4**

Europäisches
Patentamt

European
Patent Office

Office européen
des brevets

**EUROPEAN SEARCH REPORT**

Application Number

EP 17 30 5277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Freicoin Developers: "About Freicoin", , 21 November 2016 (2016-11-21), XP055401779, Retrieved from the Internet: URL:https://web.archive.org/web/2016112117 5058/http://freico.in/about/ [retrieved on 2017-08-28] | 1-5, 7-12,14 | INV. G06Q20/02 G06Q20/06 |
| A | * pages 1-5 * & Satoshi Nakamoto, Freicoin Developers: "freicoin/src/main.cpp", , 15 August 2016 (2016-08-15), XP055401785, Retrieved from the Internet: URL:https://github.com/freicoin/freicoin/b lob/4bd3c020dd9c2302fb0e983092a9109e52af2c c2/src/main.cpp [retrieved on 2017-08-28] ----- | 6,13 | |
| Y | Satoshi Nakamoto: "Bitcoin: A Peer-to-Peer Electronic Cash System", , 31 October 2008 (2008-10-31), XP055387899, http://www.mail-archive.com/cryptography%4 0metzdowd.com/msg09959.html Retrieved from the Internet: URL:http://www.bitcoin.org/bitcoin.pdf [retrieved on 2017-07-04] | 1-5, 7-12,14 | TECHNICAL FIELDS SEARCHED (IPC) G06Q |
| A | * pages 1-9 * ----- -/-- | 6,13 | |

The present search report has been drawn up for all claims

| Place of search | Date of completion of the search | Examiner |
|---|---|---|
| The Hague | 1 September 2017 | Horat, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 17 30 5277

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Jorge Timón: "How to properly handle demurrage in applications . freicoin/freicoin Wiki . GitHub", <br><br>3 February 2014 (2014-02-03), XP055401773, Retrieved from the Internet: URL:https://github.com/freicoin/freicoin/wiki/How-to-properly-handle-demurrage-in-applications [retrieved on 2017-08-28] | 1-5, 7-12,14 | |
| A | * pages 1-2 * <br>----- | 6,13 | |
| A | Silvio Gesell: "The NATURAL ECONOMIC ORDER: Chapter 4.1: Free-Money", <br><br>5 May 1920 (1920-05-05), XP055401667, Retrieved from the Internet: URL:http://www.appropriate-economics.org/ebooks/neo/part4/1.htm [retrieved on 2017-08-28] <br>* page 7, lines 1-10 * <br>----- | 1-14 | |

TECHNICAL FIELDS
SEARCHED      (IPC)

The present search report has been drawn up for all claims

| Place of search | Date of completion of the search | Examiner |
|---|---|---|
| The Hague | 1 September 2017 | Horat, David |

EPO FORM 1503 03.82 (P04C01)